# EUROPEAN PATENT APPLICATION

(11) **EP 3 270 133 A1**
(43) Date of publication of application: **17.01.2018**
(21) Application number: 17179003.3
(22) Date of filing: 30.06.2017
(51) Int. Cl.: G01L 19/00, G01L 19/14

(54) **SEALING SYSTEM FOR ELECTRONIC PRESSURE SENSOR**

(30) Priority: 12.07.2016 IT 201600072724
(71) Applicant: Bridgeport S.R.L., 24060 Bolgare (BG) (IT)
(72) Inventor: LEO, Leonardo, 24060 Bolgare (Bergamo) (IT)
(74) Representative: Petruzziello, Aldo

(57) **Abstract**

Sealing system for piezoresistive or capacitive electronic pressure sensor, said electronic pressure sensor comprising a body (20) which can be joined on one side to a fluid source and housing, on the opposite side, a mechanical support of plastic material (30) for a ceramic element with dimensions of approximately 12 x 12 mm, and approximate thickness comprised between 2 and 3 mm, (40) sensitive to pressure, and an electric connector element (50) coupled to said pressure-sensitive element (40), wherein said sealing system comprises a layer of glue (70) interposed between said mechanical support (30) and said pressure-sensitive element (40), so as to make these two components a single part, and a radially working O-ring (80), placed around a stem (34) protruding below from said mechanical support (30) and forming a seal against an inner wall of said metal body (20).

## Description

The object of the present invention is a sealing system for electronic pressure sensors, usable for any type of fluid: gas or liquid.

An electronic pressure sensor comprises, in its essential parts, a normally metal outer body with a threaded union for the connection to the source of fluid to be measured, in which are contained a support, normally in plastic, for a ceramic cell carrying the pressure-sensitive part and an electric connector from which the data detected can be taken.

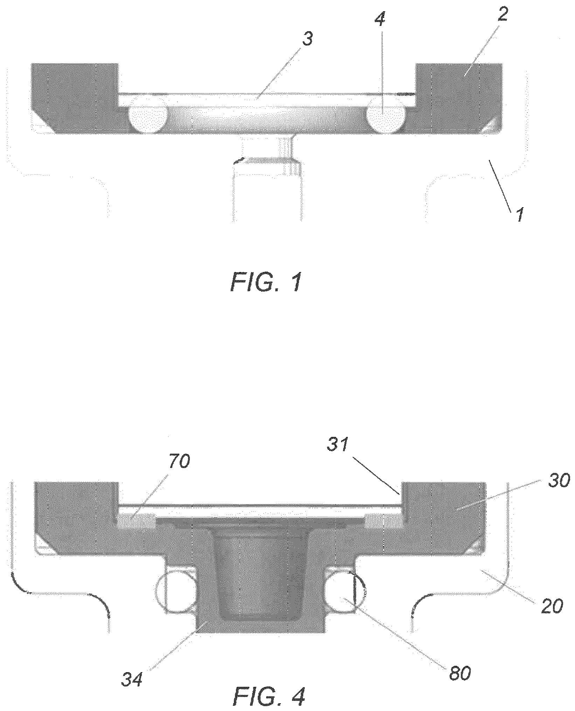

In these known pressure sensors the sealing is guaranteed by applying between the metal body and the ceramic body carrying the pressure-sensitive element a gasket or an O-ring appropriately dimensioned, as schematically shown in the attached Figure 1, where the metal body is denoted by reference numeral 1, the mechanical support in plastic by reference numeral 2, the ceramic cell with the pressure-sensitive element by reference numeral 3 and the O-ring by reference numeral 4.

According to this embodiment, the O-ring 4 goes to form a seal both against the containment metal body 1 and against the ceramic cell 3, in respect of the fluid which impacts the sensitive membrane from below.

However such a solution has the following disadvantages:
- The dimensioning of the gasket or O-ring sealing system must not interfere with the sensitive part so that relatively large dimensions are necessary, resulting in values of applied force which increase in an exponential manner at the increase of the surface and of the pressure.
- The sealing of the gasket or O-ring is guaranteed by an axial compression/deformation of the same, with consequent permanent deformation of the gasket and therefore possible cause of loss of sealing over time due to the natural ageing of the elastomer.
- Finally a "pump" effect is noted of the entire system as the pressure present and/or applied varies, moreover the dimensional expansions as the temperature of the different materials/components present vary also become very influential.

DE 20 2008 011684 U1 describes a particular configuration of pressure sensor, wherein adhesive films are provided between various components, but not directly between the pressure-sensitive element 13 and the support base 29.

The object of the invention is that of eliminating the disadvantages mentioned above.

More particularly, an object of the invention is that of providing a sealing system for piezoresistive or capacitive electronic pressure sensor which does not require the overdimensioning of traditional systems.

Another object of the invention is that of providing such a sealing system which does not have the disadvantages of the gasket or O-ring subject to axial loads, and of permanent mechanical compression.

Yet another object of the invention is to obtain the sensitive part as "monolithic" with the mechanical support which can easily be assembled with the part of the connector, which enables the phase of calibration and setting to be performed without the obligation of having the sensor complete in all of its components (for example the metal body 1) with the advantage that in the case of production discards or defects the finished sensor does not have to be rejected.

Moreover this solution allows the core of the sensor to be made, in approximate dimensions of 12 x 12 mm and approximate thickness comprised between 2 and 3 mm, as standard component, then later personalising the metal body with different types of connections and threads, with the advantages of mass production, retaining the flexibility of custom need.

Yet another object of the invention is that of providing such a sealing system which is simple to manufacture and reliable in time.

These objects are achieved by the sealing system for electronic pressure sensors according to the invention which has the features of the appended independent claim 1.

Advantageous embodiments of the invention are stated in the dependent claims. Substantially, the invention relates to a sealing system for electronic pressure sensor, said electronic pressure sensor comprising a body which can be joined, on one side, to a fluid source and housing, on the opposite side, a mechanical support provided with a seat (31) for the housing of a pressure-sensitive element, and an electric connector element coupled to said pressure-sensitive element, wherein said sealing system comprises a layer of glue interposed between said mechanical support and said pressure-sensitive element, so as to make these two components a single part, and a radially working O-ring, arranged around a stem protruding from said mechanical support, on the opposite side with respect to said pressure-sensitive element (40), and forming a seal against an inner wall of said metal body.

Further features of the invention will be made clearer by the following detailed description, referred to one of its embodiments purely by way of a non-limiting example, illustrated in the accompanying drawings, in which:
Figure 1 is a schematic sectioned view showing a sealing system for electronic pressure sensor according to the prior art;
Figure 2 is an exploded view of an electronic pressure sensor according to the invention;
Figure 3 is an overall sectioned view of the pressure sensor according to the invention;
Figure 4 is an enlarged schematic section showing in greater detail the sealing system;
Figure 5 is a plan view from above of the support for the ceramic cell shown in Figure 4;
Figure 6 is a plan view from above of the ceramic cell with sensitive element;
Figure 7 is a view of the core of the sensor, composed of a ceramic sensitive component which is to be glued on the mechanical support of plastic material.

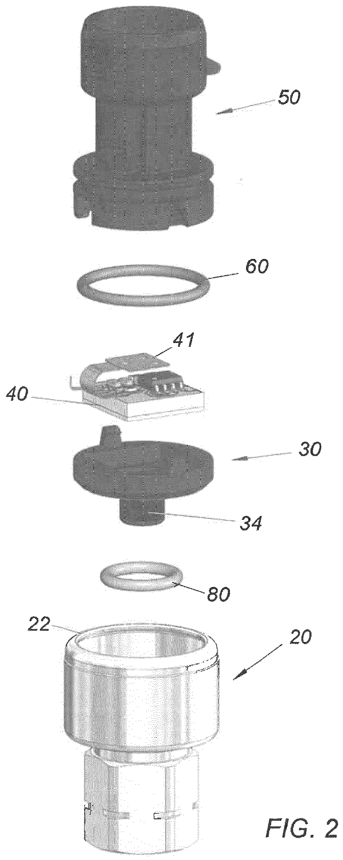

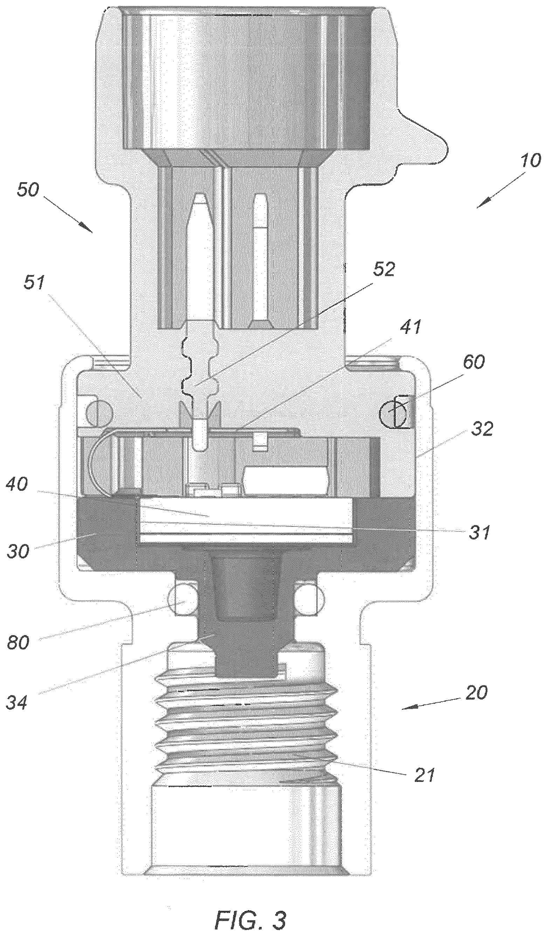

Referring to Figures 2 and 3, an electronic pressure sensor according to the invention has been denoted overall with reference numeral 10.

It comprises a normally metal body 20, having on one side, the lower one with reference to the drawings, a threaded union 21 for the connection to the source of fluid whereof the pressure has to be measured and, on the opposite side, a cup housing 22 apt to contain the components of the sensor.

More particularly in the body 20 a mechanical support is housed, generally in plastic material 30, provided with a seat 31 for the housing of a ceramic plate or cell 40, of approximate dimensions equal to 12 x 12 mm and approximate thickness comprised between 2 and 3 mm, with pressure-sensitive element.

Here below, for what is relevant for the purposes of the present invention and for reasons of simplicity, the element 40 will be referred to as ceramic plate or cell, or pressure-sensitive element, or sensitive element, or simply sensor.
In practice, the element 40 comprises for example a membrane whereon four resistances are positioned in the form of a Wheatstone bridge, or another system, for example capacitive, whose variation of resistance or capacity is indicative of the deformation of the membrane subjected to pressure, which is then converted into an electrical magnitude.

On the element 40 an electric connector element 50 is then applied, having a widened base 51, which is enclosed inside the metal body 20.

The connector element 50 has pins 52 which come into contact with a flexible printed circuit (PCB) 41 carried by the ceramic element 40.

The connector element 50 can be connected to a complementary connector element for the detection, transfer and management of the measurement data.

Between the base 51 of the connector 50 and the inner wall of the metal body 20 an O-ring 60 is placed, apt to avoid the passage of external contaminating elements.

The sealing system according to the invention can be seen better in Figures 4 to 7.

Unlike the prior art previously illustrated, according to the invention the pressure-sensitive element 40 is glued to the mechanical support 30, such as to become a single block with it.

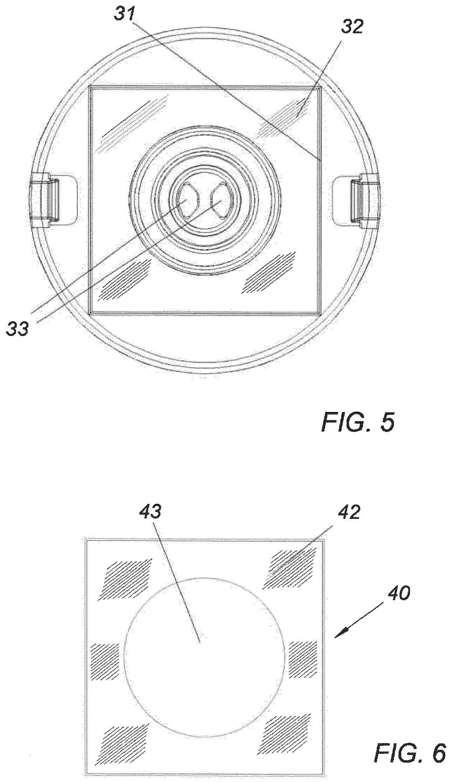

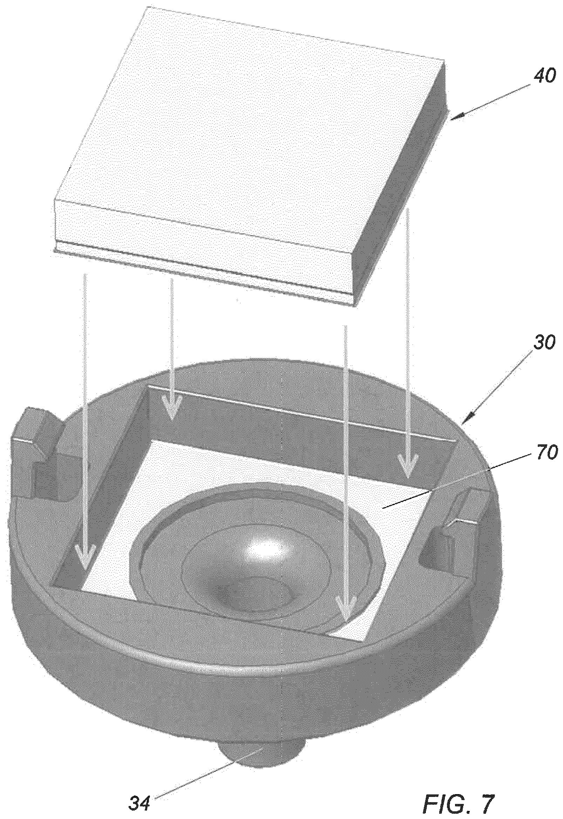

More particularly a special glue 70 is used, for example special epoxy resin, resistant to high temperatures and to high pressures, and distributed appropriately only in the area of contact between the non-sensitive part 42 of the element 40 (Figure 6) and the contact area 32 of the mechanical support 30 (Figures 5 and 7) so as to create a single part which ensures the perfect sealing both at mechanical level and leaks and seepages.

As can be seen from Figures 5 - 7, the areas of distribution of glue 32, 42, respectively on the mechanical support 30 and on the element 40 are distributed on the peripheral area of a square, outside of a circle 43 on the ceramic cell 40, where the sensitive element is provided.

From the plan view of Figure 5 of the mechanical body 30 the holes 33 can also be seen for the passage of the fluid which goes to impact the element 40.

As can be seen in Figures 3, 4 and 7, the mechanical support 30 has a discoidal shape, with a stem 34 which extends downwards, in which the aforesaid holes 33 are formed for the passage of the fluid.

The sealing between the mechanical support 30 and the metal body 20 is formed by means of an O-ring 80, placed around the stem 34 which works radially, rather than axially (with compression) as occurred in the prior art, with the advantage of not being subjected to compression during the phase of assembly and closure/flanging of the metal body 20 or of the complete sensor system, and therefore of not feeding the "pump" effect described previously, and minimising the influence of the different heat expansions due to the different nature of the materials-components.

In the case of the invention the "pump" effect does not act on the sensitive element and the pressure variations, also present, act on the single part, further improving the precision performances of the electronic sensor, eliminating and reducing the measurement drifts in the lifespan of the same sensor.

Naturally the materials of the components cited previously can be different from the ones indicated. So, for example, the pressure-sensitive part can be made, as well as in ceramic, in plastic, glass composites, metal composites and the like.

From what has been stated the advantages of the sealing system according to the invention appear clear, which eliminates the O-ring of the prior art, which was designed to form a seal simultaneously between the ceramic element, the mechanical support and the metal body of containment, working axially by compression, with the disadvantages described previously, which are brilliantly overcome by the invention.

Naturally the invention is not limited to the particular embodiment described previously and illustrated in the accompanying drawings, but numerous detail changes may be made thereto, within the reach of the person skilled in the art, without thereby departing from the scope of the same invention, as defined by the appended claims.

## Claims

1. A sealing system for piezoresistive or capacitive electronic pressure sensor, said electronic pressure sensor comprising a body (20) which is connectable, at one side, to a fluid source and housing, at the other side, a mechanical support (30) provided with a seat (31) for the housing of a pressure-sensitive element (40), and an electrical connector element (50) coupled to said pressure-sensitive element (40), **characterised in that** said sealing system comprises a layer of glue (70) interposed between said mechanical support (30) and said pressure-sensitive element (40), so as to make these two components a monolith, and a radially working O-ring (80), arranged around a stem (34) protruding from said mechanical support (30), on the opposite side with respect to said pressure-sensitive element (40), and forming a seal against an inner wall of said metal body (20).

2. Sealing system according to claim 1, wherein said layer of glue (70) is applied on an area (32) of the mechanical support (30) and on an area (42) of the pressure-sensitive element (40), external to a central sensitive area (43).

3. Sealing system according to claim 2, wherein said central sensitive area (43) of the element (40) is circular and said areas (32, 42) on which the glue (70) is applied are arranged peripherally around the central area (43) inside a square.

4. Sealing system according to any one of the preceding claims, wherein said glue (70) is a epoxy resin.

5. Sealing system according to any one of the preceding claims, wherein said pressure-sensitive element (40) is made of ceramic.

6. Sealing system according to any one of claims 1 to 4, wherein said pressure-sensitive element (40) is made of plastic, glass composites, metallic composites.

7. Sealing system according to any one of the preceding claims, wherein holes (33) are provided in said stem (34) of the mechanical support element (30) for the passage of the fluid towards the pressure-sensitive element (40).

8. Sealing system according to any one of the preceding claims, wherein said mechanical support (30) is in plastic material.

9. Sealing system according to any one of claims 3 to 8, wherein said pressure-sensitive element (40) has dimensions equal to approximately 12 x 12 mm and thickness of approximately 2 - 3 mm.
